# EUROPEAN PATENT APPLICATION

(11) **EP 4 756 196 A1**
(43) Date of publication of application: **10.06.2026**
(21) Application number: 25211528.2
(22) Date of filing: 28.10.2025
(51) Int. Cl.: F01N 3/10, F01N 11/00, F01N 9/00, F01N 13/00, F02D 35/00, F02D 41/02, F02D 41/14

(54) **EXHAUST GAS PURIFICATION APPARATUS , VEHICLE AND METHOD OF CONTROLLING EXHAUST GAS PURIFICATION APPARATUS**

(30) Priority: 09.12.2024 JP 2024214186
(71) Applicant: MAZDA MOTOR CORPORATION, Hiroshima 730-8670 (JP)
(72) Inventor: SAKATA, Yuji, HIROSHIMA, 730-8670 (JP); MISUMI, Satoshi, HIROSHIMA, 730-8670 (JP); HAMAHARA, Koji, HIROSHIMA, 730-8670 (JP)
(74) Representative: Müller-Boré & Partner Patentanwälte PartG mbB

(57) **Abstract**

An engine exhaust gas purification apparatus 100 includes a catalyst device 51 that contains palladium and rhodium as precious metal and purifies exhaust gas, a linear A/F sensor SW7 provided on an exhaust passage 50 downstream of the catalyst device 51, and a control device 60 that controls a fuel injection valve 18 so as to set the air-fuel ratio of the exhaust gas to a target air-fuel ratio on the basis of the air-fuel ratio detected by the sensor SW7, and the control device 60 determines whether the catalyst device 51 is active and determines whether the catalyst device 51 is deteriorated, and sets the target air-fuel ratio to a first air-fuel ratio on a leaner side when determining that the catalyst device 51 is not active and determining that the catalyst device 51 is deteriorated than when determining that the catalyst device 51 is not deteriorated.

## Description

### [Technical Field]

The present invention relates to an exhaust gas purification apparatus , specifically, an exhaust gas purification apparatus that includes a catalyst device provided on an exhaust passage and performs control so as to set the air-fuel ratio of exhaust gas to a target air-fuel ratio. The present invention also relates to a method of controlling an exhaust gas purification apparatus.

### [Background Art]

A technique has been known that performs feedback control (so-called air-fuel ratio control) on a fuel injection amount so as to set the air-fuel ratio of exhaust gas to a predetermined target air-fuel ratio (typically, the stoichiometric air-fuel ratio) in order to ensure exhaust gas purification performance of a catalyst device. A technique of this type is described, for example, in Patent Literature 1.

In Patent Literature 1, a technique that focuses on the generation of ammonia in a catalyst device including a three-way catalyst and aims to improve the purification efficiency for this ammonia is described. Specifically, the technique described in Patent Literature 1 calculates an ammonia generation amount in the catalyst device, and sets the target air-fuel ratio to the lean side when the ammonia generation amount is large. Accordingly, the ammonia is purified using oxygen increased by setting the air-fuel ratio to the lean side. In addition, Patent Literature 1 states that a catalyst device that has deteriorated over time generates a smaller amount of ammonia than a catalyst device immediately after being manufactured because the three-way catalyst is less active.

### [Citation List]

### [Patent Literature]

[Patent Literature 1] Japanese Patent Laid-Open No. 2024-130360

### [Summary]

### [Problem to be Solved]

As a result of intensive studies, the inventors of the present application have discovered that when the catalyst device is not active, the ammonia generation amount of the catalyst device is larger when the catalyst device is deteriorated than when the catalyst device is not deteriorated (that is, when normal). This result differs from the description in Patent Literature 1 mentioned above.

The reason why, when the catalyst device is inactive, the ammonia generation amount is larger when the catalyst device is deteriorated than when the catalyst device is normal in this manner is considered to be due to the influence of palladium (Pd) contained in precious metal of the catalyst device. That is, it is possible that the palladium is deteriorated to cause a change in the degree of influence of N₂O generation associated with NO-H₂ reaction. In the case where the catalyst device is normal (e.g., immediately after being manufactured), when the catalyst device is inactive, NO decomposition reaction of palladium proceeds and thus N₂O is selectively generated. This is considered to be because, when the catalyst device is inactive, HC, CO are hardly purified, so that the contribution of the NO-H₂ reaction is large. Thus, it can be said that when the catalyst device is normal, ammonia (NH₃) is hardly generated. By contrast, when the catalyst device is deteriorated, a temperature region in which NO is purified becomes higher (because the precious metal (e.g., Pd) in the catalyst device condenses and an active surface is reduced due to thermal stress) and the contribution of rhodium (Rh) increases in an inactive temperature region of the catalyst device, and thus N₂O generation is inhibited. Thus, it can be said that when the catalyst device is deteriorated, the ammonia generation amount relatively increases.

The present invention has been made on the basis of the findings as described above, and an object thereof is, in an exhaust gas purification apparatus that includes a catalyst device provided on an exhaust passage and performs control so as to set the air-fuel ratio of exhaust gas to a target air-fuel ratio, to effectively reduce the ammonia generation amount of the catalyst device.

### [Means for Solving the Problem]

The object described above is achieved by the present invention as defined in independent claims. For example, an exhaust gas purification apparatus, or an engine exhaust gas purification apparatus, or an engine system includes: a fuel injection valve for supplying fuel to a combustion chamber of the engine; an exhaust passage for discharging exhaust gas from the combustion chamber; a catalyst device that is provided on the exhaust passage, contains at least palladium and rhodium as precious metal, and is configured to purify the exhaust gas; a linear A/F sensor (or an A/F sensor) that is provided on the exhaust passage downstream of the catalyst device and is capable of detecting an air-fuel ratio of the exhaust gas; and a control device configured to control the fuel injection valve on the basis of the air-fuel ratio detected by the linear A/f sensor to set the air-fuel ratio of the exhaust gas to a target air-fuel ratio. The control device is configured to determine whether the catalyst device is active and determine whether the catalyst device is deteriorated, and set the target air-fuel ratio to a first air-fuel ratio on a leaner side when determining that the catalyst device is not active and determining that catalyst device is deteriorated than when determining that the catalyst device is not deteriorated. In other words, the first air-fuel ratio, to which the target air-fuel ratio is set when the catalyst device is not active and the catalyst device is deteriorated, is leaner than an air-fuel ratio to which the target air-fuel ratio is set when the catalyst device is not deteriorated.

The ammonia generation amount from the catalyst device tends to become larger when the catalyst device is inactive and deteriorated than when the catalyst device is not deteriorated (i.e., normal). Thus, in the present invention, the control device corrects the target air-fuel ratio to be leaner (or to the first air-fuel ratio on the lean side) when the catalyst device is inactive and deteriorated. Accordingly, in a situation in which the ammonia generation amount of the catalyst device increases, it is possible to purify ammonia using oxygen increased by setting the target air-fuel ratio to the lean side (or to be leaner) and effectively reduce the ammonia generation amount.

The control device may be configured to set the target air-fuel ratio to a second air-fuel ratio that is richer (or on a richer side) than the first air-fuel ratio when determining that the catalyst device is active.

In an embodiment configured in this manner, when the catalyst device is active, the ammonia generation amount tends to decrease, so the control device sets the target air-fuel ratio to be richer (or to the richer side) than the first air-fuel ratio within the range of the lean side. This makes it possible to ensure NOx purification performance while reducing ammonia emission.

The control device may be configured to set the target air-fuel ratio to a second air-fuel ratio that is richer (or on a richer side) than the first air-fuel ratio when determining that the catalyst device is not deteriorated.

In an embodiment configured in this manner, when the catalyst device is not deteriorated (normal), the ammonia generation amount tends to decrease, so the control device sets the target air-fuel ratio to be richer (or to the richer side) than the first air-fuel ratio within the range of the lean side. This makes it possible to ensure NOx purification performance while reducing ammonia emission.

The exhaust gas purification apparatus or the engine exhaust gas purification apparatus may further include, when the catalyst device is defined as a first catalyst device, a second catalyst device that is provided on the exhaust passage downstream of the first catalyst device and is configured to purify the exhaust gas, and the control device may be configured to determine whether the second catalyst device is active, and set the target air-fuel ratio to a third air-fuel ratio that is on the richer side than the second air-fuel ratio when determining that the second catalyst device is active.

When the catalyst device on the downstream side (second catalyst device) is active, even if ammonia is generated from the catalyst device on the upstream side (first catalyst device), the ammonia can be purified by the catalyst device on the downstream side. Thus, in this case, the control device sets the target air-fuel ratio to the third air-fuel ratio that is on the richer side than the second air-fuel ratio. This makes it possible to effectively ensure NOx purification performance while reducing ammonia emission.

A difference between the first air-fuel ratio and the second air-fuel ratio may be larger than a difference between the second air-fuel ratio and the third air-fuel ratio.

According to an embodiment configured in this manner, when the catalyst device is inactive and deteriorated, it is possible to use the target air-fuel ratio (first air-fuel ratio) with a high degree of lean and preferentially achieve reduction in ammonia. On the other hand, when the catalyst device is active or normal as described above, it is possible to use the target air-fuel ratio (second air-fuel ratio) with a low degree of lean, and effectively ensure NOx purification performance while reducing ammonia emission.

The third air-fuel ratio may be a normal air-fuel ratio that is set as the target air-fuel ratio when the control device determines that the catalyst device is active and determines that the catalyst device is not deteriorated.

According to an embodiment configured in this manner, when the catalyst device is active and normal, it is possible to return the target air-fuel ratio to the normal air-fuel ratio and appropriately ensure the normal exhaust gas purification performance of the catalyst device.

The control device may be configured to determine a degree of activity of the catalyst device on the basis of a fluctuation range of the air-fuel ratio detected by the linear A/F sensor within a predetermined time, and acquire a temperature of the catalyst device when the catalyst device reaches a predetermined degree of activity on the basis of a result of determining the degree of activity, and determine whether the catalyst device is deteriorated on the basis of the temperature.

In an embodiment configured in this manner, since the temperature (catalyst temperature) at which the catalyst device becomes active changes in accordance with the degree of deterioration of the catalyst device, the control device uses the catalyst temperature to diagnose the catalyst device. In addition, the control device uses the fluctuations of the air-fuel ratio on the downstream side of the catalyst device to determine the active state of the catalyst device. This is because although the air-fuel ratio on the downstream side of the catalyst device relatively largely fluctuates when the catalyst device is not active, as the catalyst device becomes active, the consumption of oxygen in the catalyst device increases and it reduces fluctuations of the air-fuel ratio on the downstream side of the catalyst device, and thus, the active state of the catalyst device can be appropriately determined on the basis of such fluctuations of the air-fuel ratio.

From the above, in the embodiment described above, the control device determines the degree of activity of the catalyst device on the basis of the fluctuation range of the air-fuel ratio on the downstream side of the catalyst device, and determines the deterioration of the catalyst device on the basis of the catalyst temperature when the catalyst device reaches the predetermined degree of activity. This makes it possible to significantly improve the accuracy of the deterioration determination on the catalyst device.

The control device may determine that the catalyst device is deteriorated when the temperature of the catalyst device when the catalyst device reaches the predetermined degree of activity is equal to or higher than a predetermined temperature.

In this case, since the rise of the exhaust gas purification performance of the catalyst device is slow, the control device determines that the catalyst device is deteriorated. This makes it possible to appropriately determine the deterioration of the catalyst device.

### [Advantageous Effect]

According to the present invention, in the engine exhaust gas purification apparatus that includes the catalyst device provided on the exhaust passage and performs control so as to set the air-fuel ratio of exhaust gas to the target air-fuel ratio, it is possible to effectively reduce the ammonia generation amount of the catalyst device.

### [Brief Description of Drawings]

FIG. 1 is a schematic configuration diagram of an engine exhaust gas purification apparatus (or an exhaust gas purification apparatus) according to an embodiment of the present invention.
FIG. 2 is a block diagram showing an electrical configuration of the engine exhaust gas purification apparatus according to the embodiment of the present invention.
FIG. 3 is a flowchart showing air-fuel ratio control according to the embodiment of the present invention.
FIG. 4 is an explanatory diagram regarding a basic concept of an air-fuel ratio correction process according to the embodiment of the present invention.
FIG. 5 is a flowchart showing the air-fuel ratio correction process according to the embodiment of the present invention.
FIG. 6 is a time chart showing the air-fuel ratio correction process according to the embodiment of the present invention.
FIG. 7 is an explanatory diagram regarding a catalyst deterioration determination process according to the embodiment of the present invention.
FIG. 8 is an additional explanatory diagram regarding the catalyst deterioration determination process according to the embodiment of the present invention.
FIG. 9 is a flowchart showing the catalyst deterioration determination process according to the embodiment of the present invention.

### [Embodiment for Carrying Out the Invention]

An engine exhaust gas purification apparatus according to an embodiment of the present invention will be described below with reference to the accompanying drawings.

### [Apparatus Configuration]

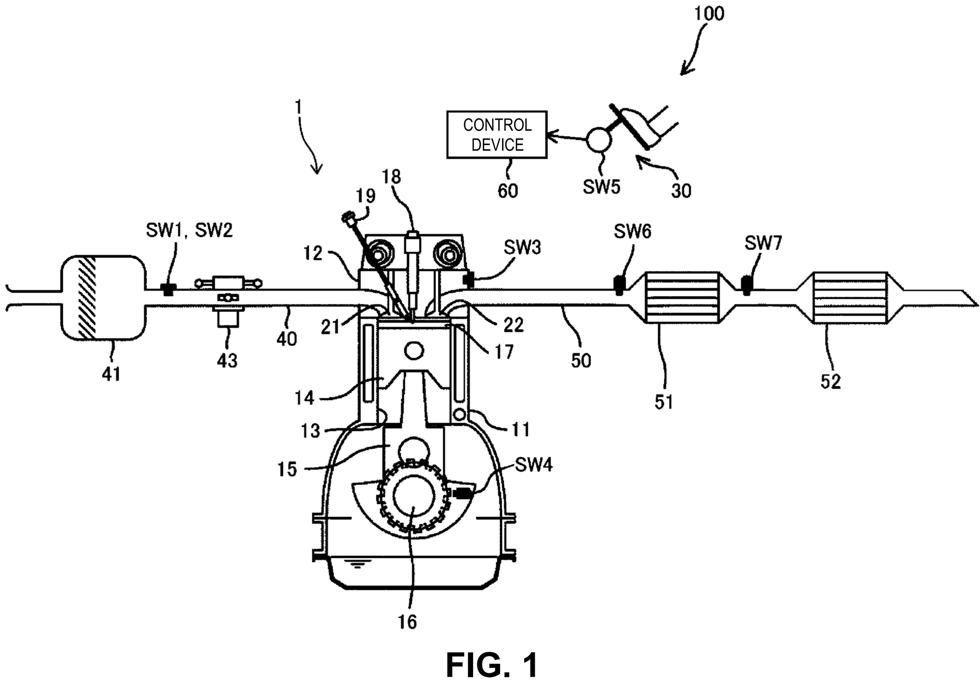

First, the entire configuration of the engine exhaust gas purification apparatus according to the present embodiment will be described with reference to FIG. 1. FIG. 1 is a schematic configuration diagram of the engine exhaust gas purification apparatus according to the present embodiment.

An engine exhaust gas purification apparatus 100 (or an engine system) is configured to be mounted on a vehicle (not shown) and, as shown in FIG. 1, mainly includes an engine 1 as an internal combustion engine that generates motive power (driving force) of the vehicle, an intake passage 40 that supplies air (intake air) to the engine 1, and an exhaust passage 50 that discharges exhaust gas from the engine 1.

The engine 1 may be a four-stroke engine that performs an intake stroke, a compression stroke, an expansion stroke, and an exhaust stroke. The engine 1 may also be a gasoline engine that uses gasoline as fuel. This fuel may be any liquid fuel that contains at least gasoline, and may be, for example, gasoline containing bioethanol or the like.

For example, the engine 1 mainly includes a cylinder block 11, a cylinder head 12 that is provided on the cylinder block 11 and forms a cylinder 13 together with the cylinder block 11, a piston 14 that reciprocates inside the cylinder 13, a connecting rod 15 coupled to the piston 14, and a crankshaft 16 coupled to the connecting rod 15. The engine 1 is, for example, a multi-cylinder engine including a plurality of cylinders 13 (only one cylinder 13 is shown in FIG. 1). The cylinder block 11, the cylinder head 12, and the piston 14 form a combustion chamber 17 of the engine 1.

In addition, the engine 1 may include a fuel injection valve 18 and, optionally, a spark plug 19 each of which is provided on the cylinder head 12. The fuel injection valve 18 injects fuel into the cylinder 13 (into the combustion chamber 17), and the spark plug 19 ignites air-fuel mixture of fuel and air inside the cylinder 13.

A fuel supply system (not shown) is connected to the fuel injection valve 18, and fuel is supplied to the fuel injection valve 18 from the system. Note that although in the engine 1 shown in FIG. 1, the fuel injection valve 18 that is disposed so as to inject fuel from above the combustion chamber 17 is shown, the fuel injection valve 18 may be disposed so as to inject fuel from the side of the combustion chamber 17 and/or an intake port. In the latter case, the fuel injection valve 18 may be provided on the cylinder block 11.

The intake passage 40 may be provided with an air cleaner 41 and a throttle valve 43. The throttle valve 43 adjusts the amount of air introduced into the cylinder 13 in accordance with its opening degree.

An intake valve 21 may be provided between the intake passage 40 and the cylinder 13. The intake valve 21 is opened and/or closed at predetermined timings by a valvetrain.

Typically, the valvetrain is an electric or hydraulic variable valvetrain that varies valve timing and/or valve lift. For example, the valvetrain is an intake sequential-valve timing (S-VT) that can continuously change the rotational phase of an intake camshaft relative to the crankshaft 16 within a predetermined angle range.

The exhaust passage 50 may be provided with an exhaust valve 22. For example, the exhaust valve 22 is provided between the cylinder 13 and the exhaust passage 50. The exhaust valve 22 is opened and/or closed at predetermined timings by a valvetrain.

Typically, the valvetrain is an electric or hydraulic variable valvetrain that varies valve timing and/or valve lift. For example, the valvetrain is an exhaust S-VT that continuously changes the rotational phase of an exhaust camshaft relative to the crankshaft 16 within a predetermined angle range.

The exhaust passage 50 is provided with one or more catalyst devices, e.g., two catalyst devices (catalyst converters) 51, 52 each of which includes a three-way catalyst. The catalyst device 51 is provided upstream of the catalyst device 52, and the catalyst device 52 is provided downstream of the catalyst device 51.

For example, the three-way catalyst contains platinum group elements (PGM) such as platinum (Pt), palladium (Pd), and rhodium (Rh), and purifies HC, CO, NOx, and the like in the exhaust gas. Basically, the three-way catalyst purifies (oxidizes) HC, CO when the air-fuel ratio of the exhaust gas is close to the stoichiometric air-fuel ratio and higher (leaner) than the stoichiometric air-fuel ratio, and purifies (reduces) NOx when the air-fuel ratio of the exhaust gas is close to the stoichiometric air-fuel ratio and lower (richer) than the stoichiometric air-fuel ratio. Note that the catalyst devices 51, 52 may correspond to the "first catalyst device" and the "second catalyst device", respectively.

As show in FIG. 1, the engine exhaust gas purification apparatus 100 includes one or more A/F sensors, e.g., linear A/F sensors SW6, SW7. The engine exhaust gas purification apparatus 100 may also include an air flow sensor SW1, an intake air temperature sensor SW2, a water temperature sensor SW3, a crank angle sensor SW4, an accelerator opening degree sensor SW5.

For example, the air flow sensor SW1 is provided on the intake passage 40 on the downstream side of the air cleaner 41 and detects the flow rate of air flowing through the intake passage 40. The intake air temperature sensor SW2 is provided on the intake passage 40 on the downstream side of the air cleaner 41 and detects the temperature of air flowing through the intake passage 40. The water temperature sensor SW3 is provided on the engine 1 and detects the temperature of a coolant in the engine 1. The crank angle sensor SW4 is provided on the engine 1 and detects the rotational angle of the crankshaft 16. The accelerator opening degree sensor SW5 is provided on an accelerator pedal mechanism 30 and detects an accelerator opening degree corresponding to the operation amount of an accelerator pedal.

The linear A/F sensor SW6 is provided on the exhaust passage 50 upstream of the catalyst device 51. The linear A/F sensor SW6 detects the air-fuel ratio of the exhaust gas flowing into the catalyst device 51 (hereinbelow, may be referred to as the "first detected air-fuel ratio").

The linear A/F sensor SW7 is provided on the exhaust passage 50 downstream of the catalyst device 51. The linear A/F sensor SW7 detect the air-fuel ratio of the exhaust gas flowing out of the catalyst device 51 (hereinbelow, may be referred to as the "second detected air-fuel ratio"). The linear A/F sensors SW6, SW7 output a signal (voltage or current signal) corresponding to the magnitude of the air-fuel ratio.

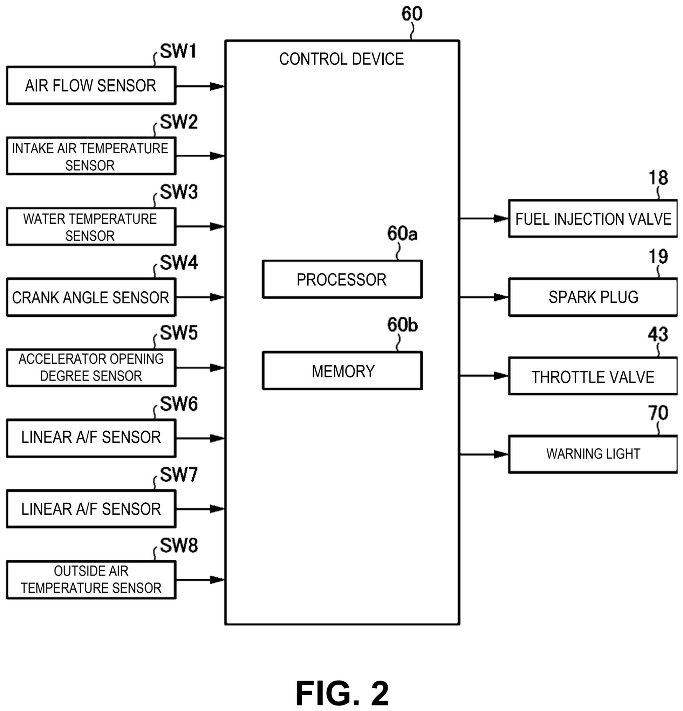

Next, the electrical configuration of the engine exhaust gas purification apparatus 100 according to the present embodiment will be described with reference to FIG. 2. FIG. 2 is a block diagram showing the electrical configuration of the engine exhaust gas purification apparatus 100 according to the present embodiment.

As shown in FIG. 2, the engine exhaust gas purification apparatus 100 includes a control device 60 configured to perform various controls in the apparatus 100. The control device 60 may be composed of a computer that includes one or more processors 60a (typically, CPUs), and a memory 60b such as ROM or RAM that stores various programs (including a basic control program such as an OS and application programs that are activated on the OS to implement specific functions) that are interpreted and executed on the processors 60a and various data. For example, the control device 60 is an electronic control unit (ECU).

Detection signals (output signals) from an outside air temperature sensor SW8 that detects an outside air temperature in addition to the sensors SW1 to SW7 described above may be input to the control device 60. Then, the control device 60 may control the fuel injection valve 18, the spark plug 19, the throttle valve 43, and the like of the engine 1 on the basis of these detection signals. In addition, the control device 60 may also control a warning light 70 for notifying an occupant of the vehicle of an abnormality.

For example, in the present embodiment, the control device 60 performs control for setting the air-fuel ratio of the exhaust gas to the target air-fuel ratio (hereinbelow, may be referred to as "air-fuel ratio control") on the basis of the air-fuel ratios detected by the A/F sensor, e.g., the linear A/F sensor SW7, or the linear A/F sensors SW6, SW7. In this air-fuel ratio control, the control device 60 may perform feedback control on the fuel injection valve 18.

In addition, in the present embodiment, the control device 60 performs a process for correcting the target air-fuel ratio used in the air-fuel ratio control (hereinbelow, may be referred to as an "air-fuel ratio correction process"), and also performs a process for determining deterioration of the catalyst device 51 (hereinbelow, referred to as a "catalyst deterioration determination process" as appropriate) that is required in the air-fuel ratio correction process. The details of these controls and processes will be described further below.

### [Air-fuel Ratio Control]

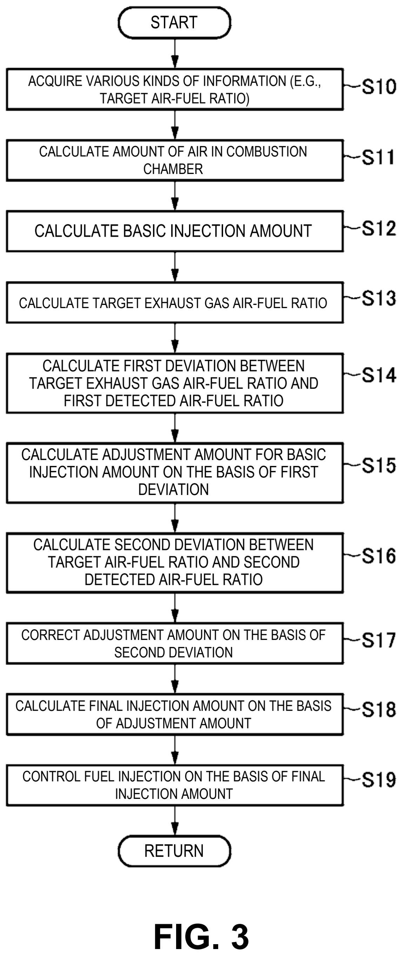

Next, the air-fuel ratio control according to the present embodiment will be described with reference to FIG. 3. FIG. 3 is a flowchart showing the air-fuel ratio control according to the present embodiment. This flow may be repeatedly executed by the control device 60 in a predetermined cycle. For example, the processor 60a in the control device 60 reads a program stored in the memory 60b and executes the program to implement the control related to the flow.

First, in step S10, the control device 60 may acquire various kinds of information including detection values detected by the above-mentioned sensors SW1 to SW8 (FIG. 2) and the like. The control device 60 also acquires the target air-fuel ratio to which the air-fuel ratio of the exhaust gas should be set in the air-fuel ratio control. This target air-fuel ratio is corrected in the air-fuel ratio correction process, which will be described further below.

Next, in step S11, the control device 60 may calculate the amount of air in the combustion chamber 17 on the basis of the flow rate of intake air detected by the air flow sensor SW1. Then, in step S12, on the basis of the target air-fuel ratio acquired in step S10 and the amount of air calculated in step S11, the control device 60 may calculate, as a basic injection amount, the amount of fuel required for the air-fuel ratio to become the target air-fuel ratio at this amount of air. Then, in step S13, the control device 60 calculates a target exhaust gas air-fuel ratio that is the air-fuel ratio of the exhaust gas corresponding to the target air-fuel ratio (i.e., the air-fuel ratio of the exhaust gas at a position where the linear A/F sensor SW6 is provided).

Next, in step S14, the control device 60 may calculate a deviation (first deviation) between the first detected air-fuel ratio detected by the linear A/F sensor SW6 and the target exhaust gas air-fuel ratio calculated in step S13. Then, in step S15, the control device 60 may calculate an adjustment amount for the basic injection amount calculated in step S12 on the basis of the first deviation calculated in step S14.

Then, in step S16, the control device 60 may calculate a deviation (second deviation) between the second detected air-fuel ratio detected by the linear A/F sensor SW7 and the target air-fuel ratio acquired in step S10. Then, in step S17, the control device 60 may correct the adjustment amount for the basic injection amount calculated in step S15 on the basis of the second deviation calculated in step S16. Then, in step S18, the control device 60 calculates a final injection amount by applying the adjustment amount corrected in step S17 to the basic injection amount.

Then, in step S19, the control device 60 may perform control (fuel injection control) on the fuel injection valve 18 so as to cause the final injection amount calculated in step S18 to be injected from the fuel injection valve 18.

### [Air-fuel Ratio Correction Process]

Next, the air-fuel ratio correction process for correcting the target air-fuel ratio used in the air-fuel ratio control described above in the present embodiment will be described.

In the present embodiment, when the catalyst device 51 is not active and the catalyst device 51 is deteriorated, the control device 60 corrects the target air-fuel ratio to the leaner side (or to be leaner) than when the catalyst device 51 is not deteriorated (i.e., when the catalyst device 51 is normal). In this case, the control device 60 sets, as the target air-fuel ratio, an air-fuel ratio that is on the leaner side (or that is leaner) than a normal air-fuel ratio that is used when the catalyst device 51 is active and the catalyst device 51 is normal (corresponding to the "first air-fuel ratio", hereinbelow, may be referred to as a "first lean side air-fuel ratio"). Note that the normal air-fuel ratio may correspond to the "third air-fuel ratio" and is set to the stoichiometric air-fuel ratio or a value close to the stoichiometric air-fuel ratio (e.g., approximately 14.5).

The target air-fuel ratio is corrected in this manner because when the catalyst device 51 is inactive, an ammonia generation amount from the catalyst device 51, including the three-way catalyst, is larger when the catalyst device 51 is deteriorated than when the catalyst device 51 is normal. The reason of this is considered to be that palladium (Pd) contained in precious metal of the catalyst device 51 is deteriorated to cause a change in the degree of influence of N₂O generation associated with NO-H₂ reaction.

In the case where the catalyst device 51 is normal (e.g., immediately after being manufactured), when the catalyst device 51 is inactive, NO decomposition reaction of palladium proceeds and thus N₂O is selectively generated. This is considered to be because, when the catalyst device 51 is inactive, HC, CO are hardly purified, so that the contribution of the NO-H₂ reaction is large. Thus, it can be said that when the catalyst device 51 is normal, ammonia (NH₃) is hardly generated.

By contrast, when the catalyst device 51 is deteriorated, a temperature region in which NO is purified becomes higher (because the precious metal (e.g., Pd) in the catalyst device 51 condenses and an active surface is reduced due to thermal stress) and the contribution of rhodium (Rh) increases in an inactive temperature region of the catalyst device 51, and thus the N₂O generation is inhibited. Thus, it can be said that when the catalyst device 51 is deteriorated, the ammonia generation amount relatively increases.

Thus, in the present embodiment, when the catalyst device 51 is inactive, the control device 60 sets the target air-fuel ratio to the first lean side air-fuel ratio on the leaner side when the catalyst device 51 is deteriorated than when the catalyst device 51 is normal. Accordingly, in a situation in which the ammonia generation amount of the catalyst device 51 increases, it is possible to purify ammonia using oxygen increased by setting the target air-fuel ratio to the lean side and effectively reduce the ammonia generation amount.

In addition, in the present embodiment, when the catalyst device 51 is active (e.g., when the catalyst device 51 is active but deteriorated) and when the catalyst device 51 is normal (e.g., when the catalyst device 51 is normal but inactive), the control device 60 may set the target air-fuel ratio to an air-fuel ratio that is on the richer side than the first lean side air-fuel ratio and on the leaner side than the normal air-fuel ratio (corresponding to the "second air-fuel ratio", hereinbelow, may be referred to as a "second lean side air-fuel ratio"). By setting the target air-fuel ratio to the richer side than the first lean side air-fuel ratio, that is, by bringing the target air-fuel ratio closer to the normal air-fuel ratio within the range of the lean side in this manner, the NOx purification performance of the catalyst device 51 is ensured.

In addition, in the present embodiment, when the catalyst device 52 on the downstream side of the catalyst device 51 has become active, the control device 60 may set the target air-fuel ratio to the normal air-fuel ratio, that is, returns the target air-fuel ratio that has been set to the lean side to the original normal air-fuel ratio. This is because, in this case, even if ammonia is generated from the catalyst device 51, the ammonia can be purified by the catalyst device 52 on the downstream side.

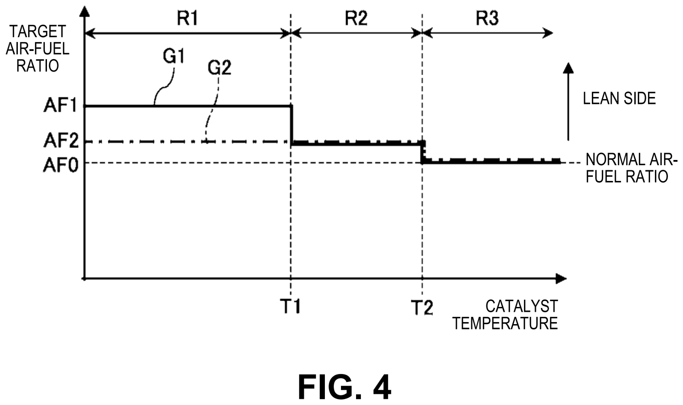

The basic concept of the air-fuel ratio correction process according to the present embodiment will be now specifically described with reference to FIG. 4. In FIG. 4, the horizontal axis represents the temperature (catalyst temperature) of the catalyst device 51, and the vertical axis represents the target air-fuel ratio. Note that, for the catalyst temperature, a temperature estimated by the control device 60 is used for example.

In FIG. 4, a catalyst temperature T1 may correspond to the temperature at which the catalyst device 51 becomes active. A catalyst temperature T2 (> the catalyst temperature T1) may correspond to the temperature of the catalyst device 51 when the catalyst device 52 on the downstream side of the catalyst device 51 becomes active.

When the catalyst device 51 reaches the catalyst temperature T2 that exceeds the catalyst temperature T1, the catalyst device 52 on the downstream side may also become an active state. For example, a region R1 lower than the catalyst temperature T1 is the temperature region in which the catalyst device 51 is inactive, regions R2, R3 equal to or higher than the catalyst temperature T1 are the temperature regions in which the catalyst device 51 is active, and a region R3 equal to or higher than the catalyst temperature T2 is the temperature region in which the catalyst device 52 is active.

Furthermore, in FIG. 4, graph G1 shows the target air-fuel ratio that is set when the catalyst device 51 is deteriorated. Graph G2 shows the target air-fuel ratio that is set when the catalyst device 51 is normal.

First, when the catalyst device 51 is deteriorated, as shown in graph G1, the control device 60 sets the target air-fuel ratio to the first lean side air-fuel ratio AF1 when the catalyst device 51 is inactive (region R1), sets the target air-fuel ratio to the second lean side air-fuel ratio AF2 that is on the richer side (or that is richer) than the first lean side air-fuel ratio AF1 when the catalyst device 51 is active but the catalyst device 52 is inactive (region R2), and sets the target air-fuel ratio to a normal air-fuel ratio AF0 that is on the richer side than the second lean side air-fuel ratio AF2 when the catalyst device 52 is active (region R3). On the other hand, when the catalyst device 51 is normal, as shown in graph G2, the control device 60 sets the target air-fuel ratio to the second lean side air-fuel ratio AF2 when the catalyst device 51 is inactive (region R1) and when the catalyst device 52 is inactive (region R2), and sets the target air-fuel ratio to the normal air-fuel ratio AF0 when the catalyst device 52 is active (region R3).

Note that, as shown in FIG. 4, the difference between the first lean side air-fuel ratio AF1 and the second lean side air-fuel ratio AF2 may be larger than the difference between the second lean side air-fuel ratio AF2 and the normal air-fuel ratio AF0. Accordingly, when the catalyst device 51 is inactive and deteriorated, it is possible to use the target air-fuel ratio (first lean side air-fuel ratio AF1) that is set to the lean side relatively largely and preferentially achieve reduction in ammonia. On the other hand, when the catalyst device 51 is active or when the catalyst device 51 is normal, it is possible to use the target air-fuel ratio (second lean side air-fuel ratio AF2) that is set relatively close to the normal air-fuel ratio AF0, and achieve ensuring NOx purification performance in addition to reducing ammonia.

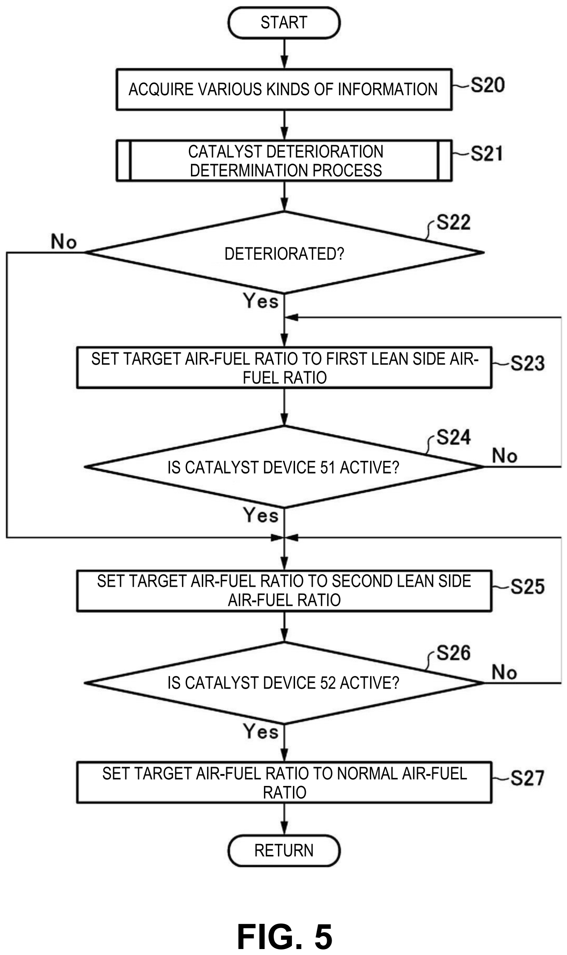

Next, a flowchart showing the air-fuel ratio correction process according to the present embodiment will be described with reference to FIG. 5. This flow may be repeatedly executed by the control device 60 in a predetermined cycle. For example, the processor 60a in the control device 60 reads a program stored in the memory 60b and executes the program to implement the control related to the flow.

First, in step S20, the control device 60 may acquire various kinds of information including detection values detected by the above-mentioned sensors SW1 to SW8 (FIG. 2) and the like. The control device 60 may also acquire the temperature of the catalyst device 51.

For example, the control device 60 estimates the temperature of the catalyst device 51 e.g., on the basis of heat balance and the like, taking into consideration heat generated by the engine 1 (obtained from the revolution speed and load of the engine 1), heat consumed in the exhaust passage 50 up to the catalyst device 51, reaction heat in the catalyst device 51, and the like. The control device 60 may also acquire the temperature of the catalyst device 52. Also in this case, as with the temperature of the catalyst device 51, the control device 60 estimates the temperature of the catalyst device 52 e.g., on the basis of heat balance and the like. Note that instead of estimating the temperatures of the catalyst devices 51, 52, the catalyst devices 51, 52 may be provided with temperature sensors to directly detect these temperatures.

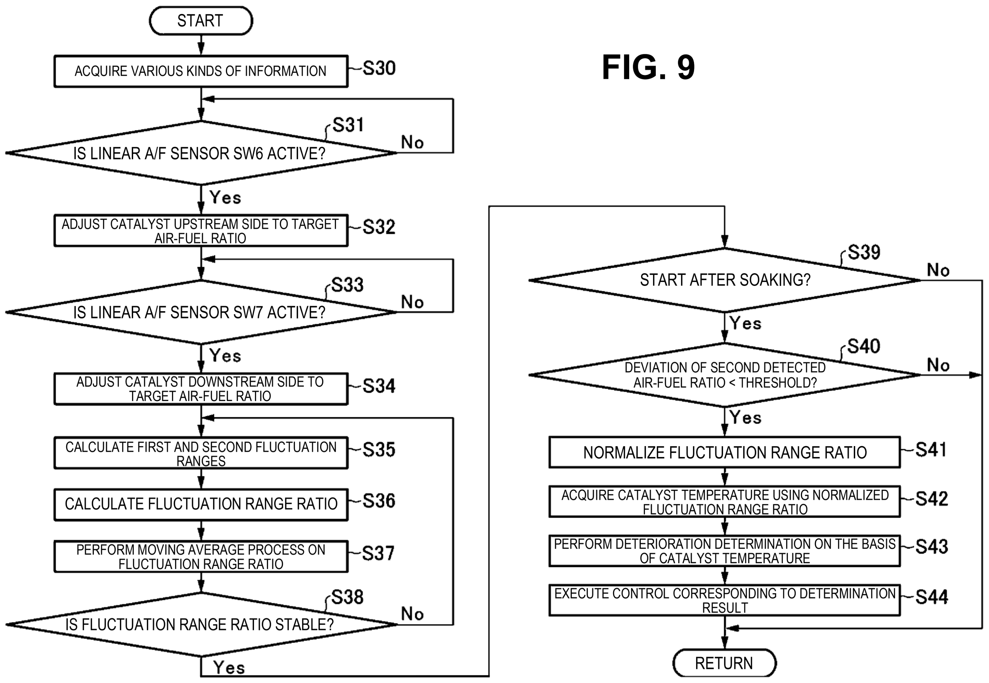

Next, in step S21, the control device 60 may perform the catalyst deterioration determination process for determining deterioration of the catalyst device 51. The details of this catalyst deterioration determination process will be described further below (FIG. 9). Then, on the basis of the catalyst deterioration determination process, in step S22, the control device 60 determines whether the catalyst device 51 is deteriorated. As a result, when the control device 60 determines that the catalyst device 51 is deteriorated (step S22: Yes), the control device 60 may proceed to step S23. In this case, in step S23, the control device 60 corrects the target air-fuel ratio to the lean side. Specifically, the control device 60 sets the target air-fuel ratio to the first lean side air-fuel ratio AF1.

Next, in step S24, the control device 60 determines whether the catalyst device 51 is active. In this case, for example, the control device 60 determines whether the catalyst device 51 is active on the basis of the estimated or detected temperature of the catalyst device 51.

As a result, when the control device 60 determines that the catalyst device 51 is active (step S24: Yes), the control device 60 may proceed to step S25. In this case, in step S25, the control device 60 may correct the target air-fuel ratio to the richer side than the first lean side air-fuel ratio AF1. For example, the control device 60 sets the target air-fuel ratio to the second lean side air-fuel ratio AF2. Then, the control device 60 may proceed to step S26.

On the other hand, when the control device 60 does not determine that the catalyst device 51 is active (step S24: No), that is, when the catalyst device 51 is inactive, the control device 60 may return to step S23. In this case, the control device 60 keeps the target air-fuel ratio set at the first lean side air-fuel ratio AF1 until the catalyst device 51 becomes active.

Next, in step S26, the control device 60 may determine whether the catalyst device 52 on the downstream side of the catalyst device 51 is active. In this case, the control device 60 may determines whether the catalyst device 52 is active on the basis of the estimated temperature of the catalyst device 51 and/or the estimated temperature of the catalyst device 52. The control device 60 may determines whether the catalyst device 52 is active on the basis of the detected temperature of the catalyst device 51 and/or the detected temperature of the catalyst device 52.

When the control device 60 determines that the catalyst device 52 is active (step S26: Yes), the control device 60 may proceed to step S27. In this case, in step S27, the control device 60 sets the target air-fuel ratio to the normal air-fuel ratio AF0.

On the other hand, when the control device 60 does not determine that the catalyst device 52 is active (step S26: No), that is, when the catalyst device 52 is inactive, the control device 60 may return to step S25. In this case, the control device 60 keeps the target air-fuel ratio set at the second lean side air-fuel ratio AF2 until the catalyst device 52 becomes active.

On the other hand, when the control device 60 does not determine in step S22 that the catalyst device 51 is deteriorated (step S22: No), that is, when the catalyst device 51 is normal, the control device 60 may proceed to step S25. In this case, in step S25, the control device 60 sets the target air-fuel ratio to the second lean side air-fuel ratio AF2. Then, the control device 60 may perform the process of step S26 and the subsequent processes described above.

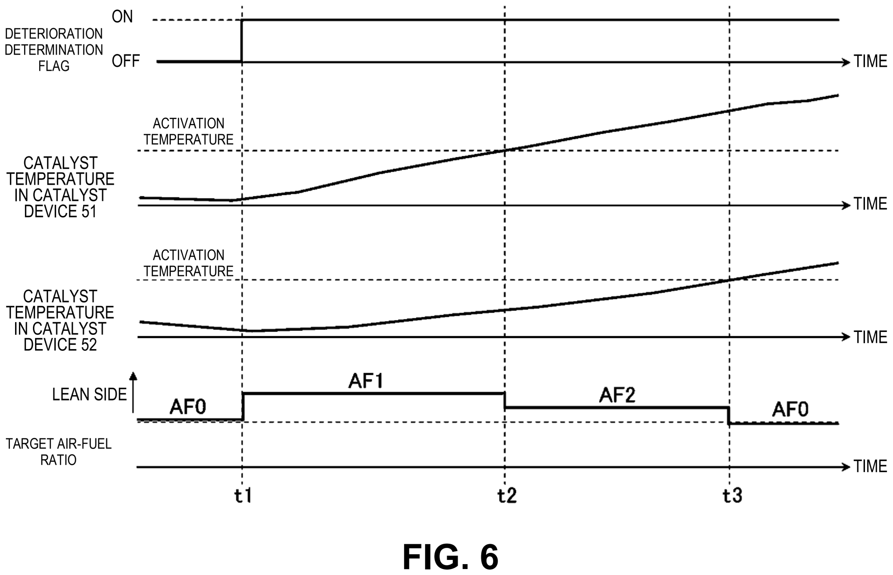

Next, a time chart of the air-fuel ratio correction process according to the present embodiment will be described with reference to FIG. 6. FIG. 6 shows, from top to bottom, temporal changes in on/off of a deterioration determination flag that is set when it is determined that the catalyst device 51 is deteriorated, the catalyst temperature of the catalyst device 51, the catalyst temperature of the catalyst device 52, and the target air-fuel ratio. Note that the catalyst temperature of the catalyst device 51 and the catalyst temperature of the catalyst device 52 are, for example, the temperatures estimated by the control device 60.

First, at time t1, the control device 60 determines that the catalyst device 51 is deteriorated and turns on the deterioration determination flag. In this case, since the catalyst device 51 is deteriorated and the catalyst device 51 is inactive, the control device 60 sets the target air-fuel ratio to the first lean side air-fuel ratio AF1.

Thereafter, at time t2, the temperature of the catalyst device 51 becomes equal to or higher than an activation temperature, that is, the catalyst device 51 becomes active. Thus, at time t2, the control device 60 may set the target air-fuel ratio to the second lean side air-fuel ratio AF2 that is on the richer side than the first lean side air-fuel ratio AF1.

Thereafter, at time t3, the temperature of the catalyst device 52 becomes equal to or higher than an activation temperature, that is, the catalyst device 52 becomes active. Thus, at time t3, the control device 60 may set the target air-fuel ratio to the normal air-fuel ratio AF0 that is on the richer side than the second lean side air-fuel ratio AF2. That is, the control device 60 returns the target air-fuel ratio to the normal air-fuel ratio AF0.

### [Catalyst Deterioration Determination Process]

Next, the catalyst deterioration determination process according to the present embodiment will be described. This catalyst deterioration determination may be performed in step S21 of the flow of the air-fuel ratio correction process shown in FIG. 5.

In the present embodiment, the control device 60 typically performs the catalyst deterioration determination process at start in the engine 1 after soaking, that is, in cold condition (assuming that the catalyst device 51 is not in an active state). This is because the catalyst device 51 can be accurately diagnosed in cold condition of the engine 1. The reason why the accurate diagnosis is possible in cold condition is as follows.

In cold condition, the catalyst device 51 may gradually become active as the temperature increases, that is, the exhaust gas purification performance (purification rate) may gradually rise (light-off performance). At this time, the rise tends to be rapid when the catalyst device 51 is normal, but slow when the catalyst device 51 is deteriorated. This is because when the catalyst device 51 is deteriorated, the precious metal condenses on the catalyst surface due to thermal stress, which reduces the active surface and degrades the exhaust gas purification performance. Thus, it can be said that, in cold condition, the difference corresponding to the degree of deterioration of the catalyst device 51 becomes noticeable.

In particular, the temperature at which the catalyst device 51 becomes active changes in accordance with the degree of deterioration of the catalyst device 51. Specifically, when the catalyst device 51 is normal, the catalyst device 51 becomes active at a relatively low temperature (thereby accelerating the rise of the exhaust gas purification performance), whereas when the catalyst device 51 is deteriorated, the catalyst device 51 does not become active until the catalyst device 51 reaches a relatively high temperature (thereby decelerating the rise of the exhaust gas purification performance). Thus, in the present embodiment, the control device 60 may diagnose the catalyst device 51 on the basis of the temperature (catalyst temperature) when the catalyst device 51 reaches a predetermined degree of activity in cold condition.

In addition, in the present embodiment, the control device 60 uses the air-fuel ratio of the exhaust gas on the downstream side of the catalyst device 51 to determine the degree of activity of the catalyst device 51. This is because although the air-fuel ratio on the downstream side of the catalyst device 51 relatively largely fluctuates when the catalyst device 51 is not active, as the catalyst device 51 becomes active, the consumption of oxygen in the catalyst device 51 increases (because the oxygen reduction efficiency of the catalyst device 51 with respect to the exhaust gas increases), which reduces fluctuations of the air-fuel ratio on the downstream side of the catalyst device 51. Thus, it can be said that the degree of activity of the catalyst device 51 can be appropriately determined on the basis of the fluctuations of the air-fuel ratio of the exhaust gas on the downstream side of the catalyst device 51.

From the above, in the present embodiment, in cold condition of the engine 1, the control device 60 may acquire the temperature (catalyst temperature) of the catalyst device 51 and may calculate a fluctuation range of the second detected air-fuel ratio detected by the linear A/F sensor SW7 within a predetermined time, and may diagnoses the catalyst device 51 on the basis of the relationship between the fluctuation range and the catalyst temperature. For example, the control device 60 determines the degree of activity of the catalyst device 51 on the basis of the fluctuation range of the second detected air-fuel ratio, and diagnoses the catalyst device 51 on the basis of the catalyst temperature when the catalyst device 51 reaches the predetermined degree of activity. When the acquired catalyst temperature is equal to or higher than a predetermined temperature, the control device 60 may determine that the catalyst device 51 is deteriorated. This is because it can be said that the rise of the exhaust gas purification performance of the catalyst device 51 is slow in this case.

In addition, in the present embodiment, the control device 60 not only calculates the fluctuation range (second fluctuation range) of the second detected air-fuel ratio detected within the predetermined time by the linear A/F sensor SW7 provided on the downstream side of the catalyst device 51 but also calculates the fluctuation range (first fluctuation range) of the first detected air-fuel ratio detected within the predetermined time by the linear A/F sensor SW6 provided on the upstream side of the catalyst device 51, calculates a fluctuation range ratio (the first fluctuation range/the second fluctuation range) that is the ratio of the first fluctuation range to the second fluctuation range, and determines the degree of activity of the catalyst device 51 on the basis of the fluctuation range ratio. Since the first fluctuation range on the upstream side of the catalyst device 51 is not affected by the exhaust gas purification performance of the catalyst device 51 and thus stable, in the present embodiment, the magnitude of the second fluctuation range on the downstream side of the catalyst device 51 is evaluated using such a first fluctuation range as a criterion (reference).

For example, in the present embodiment, the control device 60 normalizes the fluctuation range ratio described above, determines that the catalyst device 51 has reached the predetermined degree of activity when the fluctuation range ratio normalized (hereinbelow, referred to as the "normalized fluctuation range ratio" as appropriate) reaches a predetermined value, and diagnoses the catalyst device 51 on the basis of the catalyst temperature at this time. Since the fluctuation range ratio has no unit and changes in accordance with various factors such as the amount of precious metal, the durability, and the deteriorated state of the catalyst device 51, to eliminate the influence of these factors and ensure versatility, the process is performed using the value obtained by normalizing the fluctuation range ratio (the normalized fluctuation range ratio).

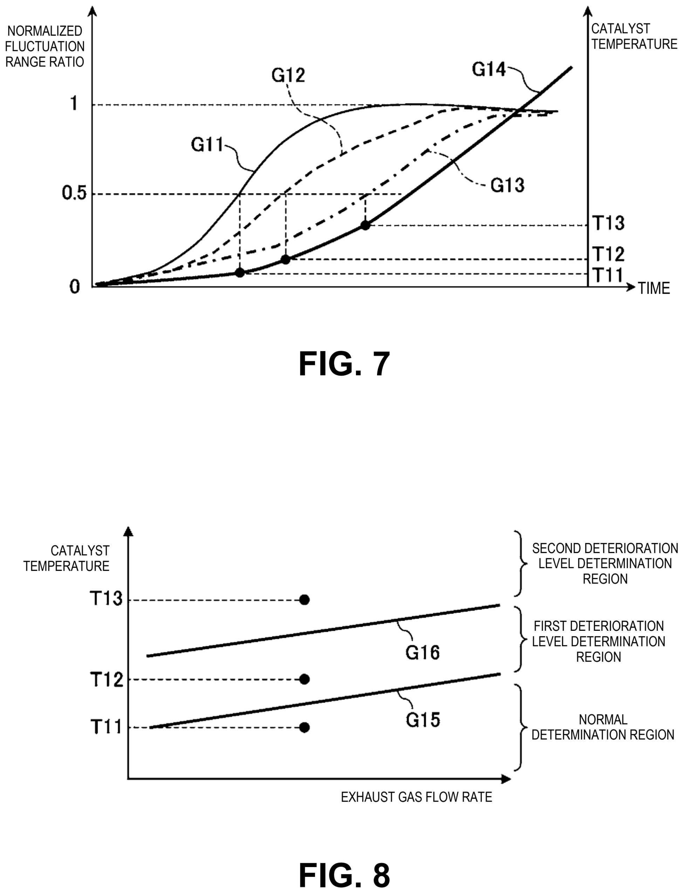

Here, the catalyst deterioration determination process performed in the present embodiment will be exemplarily described with reference to FIGS. 7, 8. FIG. 7 is an explanatory diagram of the catalyst temperature that is acquired in accordance with the normalized fluctuation range ratio in the present embodiment, and FIG. 8 is an explanatory diagram of the deterioration determination based on the catalyst temperature acquired in FIG. 7.

FIG. 7 shows time on the horizontal axis, and shows the normalized fluctuation range ratio and the catalyst temperature (the temperature of the catalyst device 51, the same applies hereinbelow) on the vertical axis. Specifically, graph G11 shows an example of a temporal change in the normalized fluctuation range ratio when the catalyst device 51 is normal, graph G12 shows an example of a temporal change in the normalized fluctuation range ratio when the catalyst device 51 is at a deterioration level that does not require replacement (hereinbelow, referred to as the "first deterioration level"), and graph G13 shows an example of a temporal change in the normalized fluctuation range ratio when the catalyst device 51 is at a deterioration level that requires replacement (corresponding to a failure, hereinbelow, referred to as the "second deterioration level").

The normalized fluctuation range ratio is expressed in the range of 0 to 1 by performing a normalization process with a maximum value of the fluctuation range ratio obtained in a series of processes (corresponding to the value when the temporal change in the fluctuation range ratio becomes extremely small) defined as 1. In addition, graph G14 shows an example of a temporal change in the catalyst temperature. For example, this catalyst temperature is the temperature estimated by the control device 60.

From graphs G11, G12, G13, it can be seen that the rise of the normalized fluctuation range ratio is slower when the catalyst device 51 is deteriorated than when the catalyst device 51 is normal. This means that the rise of the exhaust gas purification performance of the catalyst device 51 is slow, in other words, the speed with which the catalyst device 51 becomes active is slow.

The control device 60 may acquire the catalyst temperature when the normalized fluctuation range ratio reaches the predetermined value using the temporal change in the catalyst temperature shown in graph G14. For example, the control device 60 acquires temperatures T11, T12, T13 as the catalyst temperatures when the normalized fluctuation range ratio reaches the predetermined value (0.5) in graphs G11, G12, and G13, respectively. When the catalyst temperature to be acquired is higher when the catalyst device 51 is deteriorated than when the catalyst device 51 is normal (T13 > T12 > T11).

Next, FIG. 8 shows an exhaust gas flow rate on the horizontal axis and shows the catalyst temperature on the vertical axis. Specifically, graph G15 is a determination line that is defined by the exhaust gas flow rate and the catalyst temperature and distinguishes between being normal and the first deterioration level of the catalyst device 51, and graph G16 is a determination line that is defined by the exhaust gas flow rate and the catalyst temperature and distinguishes between the first deterioration level and the second deterioration level of the catalyst device 51. For example, when the catalyst temperature T11 is acquired, since T11 is below the determination line G15, the control device 60 determines that the catalyst device 51 is normal, when the catalyst temperature T12 is acquired, since T12 is above the determination line G15 and below the determination line G16, the control device 60 determines that the catalyst device 51 is at the first deterioration level, and when the catalyst temperature T13 is acquired, since T13 is above the determination line G16, the control device 60 determines that the catalyst device 51 is at the second deterioration level.

Next, a flowchart showing the catalyst deterioration determination process according to the present embodiment will be described with reference to FIG. 9. This flow may be repeatedly executed by the control device 60 in a predetermined cycle. For example, the processor 60a in the control device 60 reads a program stored in the memory 60b and executes the program to implement the control related to the flow. Note that the flow shown in FIG. 9 is performed, for example, at start of the engine 1.

First, in step S30, the control device 60 may acquire various kinds of information including detection values detected by the above-mentioned sensors SW1 to SW8 (FIG. 2) and the like. For example, the control device 60 acquires the first detected air-fuel ratio detected by the linear A/F sensor SW6, the second detected air-fuel ratio detected by the linear A/F sensor SW7, the outside air temperature detected by the outside air temperature sensor SW8, and the like.

The control device 60 may also acquire the temperature (catalyst temperature) of the catalyst device 51. For example, the control device 60 estimates the catalyst temperature.

By comparing the catalyst temperature with the outside air temperature, it is possible to determine whether the engine 1 is at start after soaking. That is, when the catalyst temperature and the outside air temperature are approximately equal to each other at the start of the catalyst deterioration determination process, it can be said that it is at start after soaking. Note that instead of estimating the catalyst temperature, the catalyst device 51 may be provided with a temperature sensor to directly detect the catalyst temperature.

Next, in step S31, the control device 60 may determine whether the linear A/F sensor SW6 is active. For example, on the basis of the magnitude of the internal resistance of the linear A/F sensor SW6 (indicating the temperature of the linear A/F sensor SW6), the control device 60 determines the activity of the sensor.

As a result of step S31, when the control device 60 determines that the linear A/F sensor SW6 is active (step S31: Yes), the control device 60 may proceed to step S32 and may control the fuel injection valve 18 so as to adjust the air-fuel ratio on the upstream side of the catalyst device 51 to the target air-fuel ratio. On the other hand, when the control device 60 does not determine that the linear A/F sensor SW6 is active (step S31: No), the control device 60 may return to step S31.

Next, in step S33, the control device 60 may determine whether the linear A/F sensor SW7 is active. For example, on the basis of the magnitude of the internal resistance of the linear A/F sensor SW7 (indicating the temperature of the linear A/F sensor SW7), the control device 60 determines the activity of the sensor.

As a result of step S33, when the control device 60 determines that the linear A/F sensor SW7 is active (step S33: Yes), the control device 60 may proceed to step S34 and may control the fuel injection valve 18 so as to adjust the air-fuel ratio on the downstream side of the catalyst device 51 to the target air-fuel ratio. On the other hand, when the control device 60 does not determine that the linear A/F sensor SW7 is active (step S33: No), the control device 60 returns to step S33.

Next, in step S35, the control device 60 may calculate the first fluctuation range for the first detected air-fuel ratio from a maximum value and a minimum value of the first detected air-fuel ratio detected within the predetermined time by the linear A/F sensor SW6 provided on the upstream side of the catalyst device 51. At the same time, the control device 60 may calculate the second fluctuation range for the second detected air-fuel ratio from a maximum value and a minimum value of the second detected air-fuel ratio detected within the predetermined time by the linear A/F sensor SW7 provided on the downstream side of the catalyst device 51.

Then, the control device 60 proceeds to step S36 and calculates, from the first fluctuation range and the second fluctuation range calculated in step S35, the fluctuation range ratio (the first fluctuation range/the second fluctuation range) that is the ratio of these ranges. Then, the control device 60 proceeds to step S37 and performs a moving average process on the fluctuation range ratio calculated in step S36 (hereinbelow, the fluctuation range ratio used in the subsequent processes refers to the value after the moving average process).

Next, in step S38, the control device 60 may determines whether the fluctuation range ratio is stable. Here, the control device 60 determines whether the catalyst device 51 is active by checking whether the fluctuation range ratio is stable. For example, the control device 60 determines whether a fluctuation value of the fluctuation range ratio is less than a predetermined threshold.

As a result of step S38, when the control device 60 determines that the fluctuation range ratio is stable (step S38: Yes), the control device 60 may proceed to step S39, and when the control device 60 does not determine that the fluctuation range ratio is stable (step S38: No), the control device 60 returns to step S35.

Next, in step S39, the control device 60 may determine whether the current situation is a situation in which the engine 1 (vehicle) has started after being soaked. In this case, the control device 60 reads a soak time and determines whether the engine 1 has been soaked for a predetermined time or longer. This causes the catalyst deterioration determination process to be performed at start after the engine 1, the catalyst device 51, and the like are sufficiently cooled.

As a result of step S39, when the control device 60 determines that it is the start after soaking (step S39: Yes), the control device 60 may proceed to step S40, and when the control device 60 does not determine that it is the start after soaking (step S39: No), the control device 60 may finishe the catalyst deterioration determination process.

Next, in step S40, the control device 60 may determine whether the deviation between the second detected air-fuel ratio detected by the linear A/F sensor SW7 and a target value is less than a threshold. Here also, the control device 60 determines whether the catalyst device 51 is active by checking whether the second detected air-fuel ratio is stable.

As a result of step S40, when the control device 60 determines that the deviation of the second detected air-fuel ratio is less than the threshold (step S40: Yes), the control device 60 may proceed to step S41, and when the control device 60 does not determine that the deviation of the second detected air-fuel ratio is less than the threshold (step S40: No), the control device 60 may finishe the catalyst deterioration determination process.

Next, in step S41, the control device 60 may normalize the fluctuation range ratio calculated up to this time. For example, the control device 60 defines, in the fluctuation range ratio continuously calculated from the start of the catalyst deterioration determination process, its maximum value (corresponding to the value when the temporal change in the fluctuation range ratio becomes extremely small) as 1, and expresses all the fluctuation range ratios continuously calculated in this manner in the range of 0 to 1.

Next, in step S42, the control device 60 may acquire the catalyst temperature when the normalized fluctuation range ratio reaches the predetermined value (e.g., 0.5) on the basis of the normalized fluctuation range ratio calculated in step S41 and the catalyst temperature estimated up to this time.

Next, in step S43, the control device 60 may perform deterioration determination on the catalyst device 51 on the basis of the catalyst temperature acquired in step S42. For example, the control device 60 determines that the catalyst device 51 is normal when the catalyst temperature is lower than the temperature defined by the determination line G15, determines that the catalyst device 51 is at the first deterioration level when the catalyst temperature is equal to or higher than the temperature defined by the determination line G15 and lower than the temperature defined by the determination line G16, and determines that the catalyst device 51 is at the second deterioration level when the catalyst temperature is equal to or higher than the temperature defined by the determination line G16.

Next, in step S44, the control device 60 may execute control corresponding to the determination result of step S44. For example, when the control device 60 diagnoses that the catalyst device 51 is at the second deterioration level, the control device 60 turns on the warning light 70. In addition, when the control device 60 determines that the catalyst device 51 is at the first deterioration level, the control device 60 controls the fuel injection valve 18 so as to cause, when a fuel cut for the engine 1 is executed later, the amount of fuel increased upon a return from the fuel cut to be smaller than when the catalyst device 51 is normal. The reason why this control is performed is as follows.

During a fuel cut, only air is supplied to the catalyst device 51, and the oxygen storage capacity (OSC) increases. When the oxygen storage capacity of the catalyst device 51 increases in this manner, the NOx purification performance is degraded after a return from the fuel cut. Thus, the control device 60 temporarily increases the amount of fuel so as to reduce the oxygen storage capacity of the catalyst device 51 at a return from the fuel cut.

Here, when the catalyst device 51 is normal, it is necessary to increase the amount of fuel because the oxygen storage capacity is high, but when the catalyst device 51 is deteriorated, it is not necessary to increase the amount of fuel as much as in normal condition because the oxygen storage capacity is low. For this reason, the amount of fuel increased when the engine 1 returns from the fuel cut is made smaller when the catalyst device 51 is deteriorated than when the catalyst device 51 is normal.

Note that although in the embodiment described above, the catalyst deterioration determination process capable of accurately determining deterioration has been described, the present invention is not limited to applying this catalyst deterioration determination process and may apply various general catalyst deterioration determination processes (e.g., a method of determining deterioration on the basis of the oxygen storage capacity of the catalyst device 51).

### [Action and Effects]

Next, the action and effects of the engine exhaust gas purification apparatus 100 according to the present embodiment will be described.

In the present embodiment, the engine exhaust gas purification apparatus 100 includes the fuel injection valve 18 for supplying fuel to the combustion chamber 17 of the engine 1, the exhaust passage 50 for discharging exhaust gas from the combustion chamber 17, the catalyst device 51 that is provided on the exhaust passage 50, contains at least palladium (Pd) and rhodium (Rh) as precious metal, and is configured to purify the exhaust gas, the linear A/F sensor SW7 that is provided on the exhaust passage 50 downstream of the catalyst device 51 and is capable of detecting the air-fuel ratio of the exhaust gas, and the control device 60 configured to control the fuel injection valve 18 on the basis of the air-fuel ratio detected by the linear A/f sensor SW7 to set the air-fuel ratio of the exhaust gas to the target air-fuel ratio, and the control device 60 is configured to determine whether the catalyst device 51 is active and determine whether the catalyst device 51 is deteriorated, and set the target air-fuel ratio to the first lean side air-fuel ratio AF1 on the leaner side when determining that the catalyst device 51 is not active and determining that the catalyst device 51 is deteriorated than when determining that the catalyst device 51 is not deteriorated.

The ammonia generation amount from the catalyst device 51 tends to become larger when the catalyst device 51 is inactive and deteriorated than when the catalyst device 51 is not deteriorated (i.e., normal). Thus, in the present embodiment, the control device 60 corrects the target air-fuel ratio to the first lean side air-fuel ratio AF1 on the lean side when the catalyst device 51 is inactive and deteriorated. Accordingly, in a situation in which the ammonia generation amount of the catalyst device 51 increases, it is possible to purify ammonia using oxygen increased by setting the target air-fuel ratio to the lean side and effectively reduce the ammonia generation amount.

In addition, in the present embodiment, the control device 60 may be configured to set the target air-fuel ratio to the second lean side air-fuel ratio AF2 that is on the richer side than the first lean side air-fuel ratio AF1 when determining that the catalyst device 51 is active. When the catalyst device 51 is active, the ammonia generation amount tends to decrease, so that the control device 60 sets the target air-fuel ratio to the richer side than the first lean side air-fuel ratio AF1 within the range of the lean side. This makes it possible to ensure NOx purification performance while reducing ammonia emission.

In addition, in the present embodiment, the control device 60 may be configured to set the target air-fuel ratio to the second lean side air-fuel ratio AF2 that is on the richer side than the first lean side air-fuel ratio AF1 also when determining that the catalyst device 51 is not deteriorated. When the catalyst device 51 is normal, the ammonia generation amount tends to decrease, so that the control device 60 sets the target air-fuel ratio to the richer side than the first lean side air-fuel ratio AF1 within the range of the lean side. This makes it possible to ensure NOx purification performance while reducing ammonia emission.

In addition, in the present embodiment, the control device 60 may determine whether the catalyst device 52 on the downstream side of the catalyst device 51 is active, and may set the target air-fuel ratio to the normal air-fuel ratio AF0 that is on the richer side than the second lean side air-fuel ratio AF2 when determining that the catalyst device 52 is active. In this case, even if ammonia is generated from the catalyst device 51, since the ammonia can be purified by the catalyst device 52 on the downstream side in an active state, the control device 60 sets the target air-fuel ratio to the normal air-fuel ratio. This makes it possible to effectively ensure NOx purification performance while reducing ammonia emission.

In addition, in the present embodiment, the difference between the first lean side air-fuel FA1 ratio and the second lean side air-fuel ratio FA2 may be larger than the difference between the second lean side air-fuel ratio Af2 and the normal air-fuel ratio AF0.
Accordingly, when the catalyst device 51 is inactive and deteriorated, it is possible to use the target air-fuel ratio (first lean side air-fuel ratio AF1) that is set to the lean side relatively largely and preferentially achieve reduction in ammonia. On the other hand, when the catalyst device 51 is active or normal as described above, it is possible to use the target air-fuel ratio (second lean side air-fuel ratio AF2) that is set relatively close to the normal air-fuel ratio AF0, and effectively ensure NOx purification performance while reducing ammonia emission.

In addition, in the present embodiment, the control device 60 may set the target air-fuel ratio to the normal air-fuel ratio AF0 when determining that the catalyst device 51 is active and it is determined that the catalyst device 51 is not deteriorated. Accordingly, when the catalyst device 51 is active and normal, it is possible to return the target air-fuel ratio to the normal air-fuel ratio AF0 and appropriately ensure the normal exhaust gas purification performance of the catalyst device 51.

In addition, in the present embodiment, the control device 60 may determine the degree of activity of the catalyst device 51 on the basis of the fluctuation range of the air-fuel ratio detected by the linear A/F sensor SW6 within the predetermined time, may acquire the catalyst temperature of the catalyst device 51 when the catalyst device 51 reaches the predetermined degree of activity on the basis of the result of determining the degree of activity, and may determine whether the catalyst device 51 is deteriorated on the basis of the temperature.

According to the present embodiment as such, since the temperature (catalyst temperature) at which the catalyst device 51 becomes active changes in accordance with the degree of deterioration of the catalyst device 51, the control device 60 uses the catalyst temperature to diagnose the catalyst device 51. In addition, the control device 60 uses the fluctuations of the air-fuel ratio on the downstream side of the catalyst device 51 to determine the active state of the catalyst device 51. This is because although the air-fuel ratio on the downstream side of the catalyst device 51 relatively largely fluctuates when the catalyst device 51 is not active, as the catalyst device 51 becomes active, the consumption of oxygen in the catalyst device 51 increases, which reduces fluctuations of the air-fuel ratio on the downstream side of the catalyst device 51, and thus, the active state of the catalyst device 51 can be appropriately determined on the basis of such fluctuations of the air-fuel ratio.

From the above, in the present embodiment, the control device 60 may determine the degree of activity of the catalyst device 51 on the basis of the fluctuation range of the air-fuel ratio on the downstream side of the catalyst device 51, and may determine the deterioration of the catalyst device 51 on the basis of the catalyst temperature when the catalyst device 51 reaches the predetermined degree of activity. This makes it possible to significantly improve the accuracy of the deterioration determination on the catalyst device 51.

In addition, in the present embodiment, the control device 60 may determine that the catalyst device 51 is deteriorated when the acquired catalyst temperature is equal to or higher than the predetermined temperature. In this case, since the rise of the exhaust gas purification performance of the catalyst device 51 is slow, the control device 60 determines that the catalyst device 51 is deteriorated. This makes it possible to appropriately determine the deterioration of the catalyst device 51.

### [Reference Signs List]

1 engine
13 cylinder
17 combustion chamber
18 fuel injection valve
19 spark plug
40 intake passage
50 exhaust passage
51, 52 catalyst device
60 control device
100 engine exhaust gas purification apparatus
SW6, SW7 linear A/F sensor

## Claims

1. An exhaust gas purification apparatus (100), comprising:
a fuel injection valve (18) configured to supply fuel to a combustion chamber (17) of an engine (1);
an exhaust passage (50) configured to discharge exhaust gas from the combustion chamber (17);
a catalyst device (51) that is provided on the exhaust passage (50), contains at least palladium and rhodium as precious metal, and is configured to purify the exhaust gas;
an A/F sensor (SW7) that is provided on the exhaust passage (50) downstream of the catalyst device (51) and is capable of detecting an air-fuel ratio of the exhaust gas; and
a control device (60) configured to control the fuel injection valve (18) on the basis of the air-fuel ratio detected by the A/f sensor (SW7) to set the air-fuel ratio of the exhaust gas to a target air-fuel ratio, wherein
the control device (60) is configured to
determine whether the catalyst device (51) is active and determine whether the catalyst device (51) is deteriorated, and
set the target air-fuel ratio to a first air-fuel ratio (AF1) to be leaner when determining that the catalyst device (51) is not active and determining that the catalyst device (51) is deteriorated than when determining that the catalyst device (51) is not deteriorated.

2. The exhaust gas purification apparatus (100) according to claim 1, wherein the control device (60) is configured to set the target air-fuel ratio to a second air-fuel ratio (AF2) that is richer than the first air-fuel ratio (AF1) when determining that the catalyst device (51) is active.

3. The exhaust gas purification apparatus (100) according to claim 1,
wherein the control device (60) is configured to set the target air-fuel ratio to a second air-fuel ratio (AF2) that is richer than the first air-fuel ratio (AF1) when determining that the catalyst device (51) is not deteriorated, or
wherein the control device (60) is configured to set the target air-fuel ratio to a second air-fuel ratio (AF2) that is richer than the first air-fuel ratio (AF1) when determining that the catalyst device (51) is active and the catalyst device (51) is not deteriorated.

4. The exhaust gas purification apparatus (100) according to claim 2 or 3, further comprising, when the catalyst device (51) is defined as a first catalyst device (51), a second catalyst device (52) that is provided on the exhaust passage (50) downstream of the first catalyst device (51) and is configured to purify the exhaust gas, wherein
the control device (60) is configured to
determine whether the second catalyst device (52) is active, and
set the target air-fuel ratio to a third air-fuel ratio (AF0) that is richer than the second air-fuel ratio (AF2) when determining that the second catalyst device (52) is active.

5. The exhaust gas purification apparatus (100) according to claim 4, wherein a difference between the first air-fuel ratio (AF1) and the second air-fuel ratio (AF2) is larger than a difference between the second air-fuel ratio (AF2) and the third air-fuel ratio (AF0).

6. The exhaust gas purification apparatus (100) according to claim 4 or 5, wherein the third air-fuel ratio (AF0) is a normal air-fuel ratio that is set as the target air-fuel ratio when the control device (60) determines that the catalyst device (51) is active and determines that the catalyst device (51) is not deteriorated.

7. The exhaust gas purification apparatus (100) according to any one of the preceding claims, wherein
the control device (60) is configured to
determine a degree of activity of the catalyst device (51) on the basis of a fluctuation range of the air-fuel ratio detected by the A/F sensor (SW7) within a predetermined time, and
acquire a temperature of the catalyst device (51) when the catalyst device (51) reaches a predetermined degree of activity on the basis of a result of determining the degree of activity, and determine whether the catalyst device (51) is deteriorated on the basis of the temperature.

8. The exhaust gas purification apparatus (100) according to claim 7, wherein the control device (60) determines that the catalyst device (51) is deteriorated when the temperature of the catalyst device (51) when the catalyst device (51) reaches the predetermined degree of activity is equal to or higher than a predetermined temperature.

9. The exhaust gas purification apparatus (100) according to any one of the preceding claims, wherein the control device is configured to determine whether the catalyst device (51) is active based on a temperature of the catalyst device (51).

10. The exhaust gas purification apparatus (100) according to claim 9, wherein
the control device is configured to determine that the catalyst device (51) is active when the temperature of the catalyst device (51) is equal to or higher than a predetermined temperature (T1), and
the control device is configured to determine that the catalyst device (51) is inactive when the temperature of the catalyst device (51) is lower than the predetermined temperature (T1).

11. The exhaust gas purification apparatus (100) according to any one of claims 7 to 10, wherein the control device (60) is configured to estimate the temperature of the catalyst device (51).

12. The exhaust gas purification apparatus (100) according to any one of the preceding claims, wherein the A/F sensor (SW7) is a linear A/F sensor.

13. The exhaust gas purification apparatus (100) according to any one of the preceding claims, further comprising the engine (1).

14. A vehicle comprising the exhaust gas purification apparatus (100) according to claim 13.

15. A method of controlling an exhaust gas purification apparatus (100), wherein the exhaust gas purification apparatus (100) includes:
a fuel injection valve (18) configured to supply fuel to a combustion chamber (17) of an engine (1);
an exhaust passage (50) configured to discharge exhaust gas from the combustion chamber (17);
a catalyst device (51) that is provided on the exhaust passage (50), contains at least palladium and rhodium as precious metal, and is configured to purify the exhaust gas;
an A/F sensor (SW7) that is provided on the exhaust passage (50) downstream of the catalyst device (51) and is capable of detecting an air-fuel ratio of the exhaust gas; and
a control device (60) configured to control the fuel injection valve (18) on the basis of the air-fuel ratio detected by the A/f sensor (SW7) to set the air-fuel ratio of the exhaust gas to a target air-fuel ratio, the method comprising:
determining whether the catalyst device (51) is active and determining whether the catalyst device (51) is deteriorated; and
setting the target air-fuel ratio to a first air-fuel ratio (AF1) to be leaner when determining that the catalyst device (51) is not active and determining that the catalyst device (51) is deteriorated than when determining that the catalyst device (51) is not deteriorated.
